# EUROPÄISCHE PATENTSCHRIFT

(11) **EP 1 897 514 B1**
(45) Veröffentlichungstag und Bekanntmachung des Hinweises auf die Patenterteilung: **26.01.2011**
(21) Anmeldenummer: 07012003.5
(22) Anmeldetag: 19.06.2007
(51) Int. Cl.: A61C 13/16, A61C 13/18, A61C 13/20

(54) **Vorrichtung und Verfahren zur Herstellung von dentalmedizinischen Formteilen**
Device and method for manufacturing moulded dental parts
Dispositif et procédé destinés à la fabrication des pièces d'orthodontie embouties

(30) Priorität: 06.09.2006 DE 102006041786
(43) Veröffentlichungstag der Anmeldung: 12.03.2008
(73) Patentinhaber: Ivoclar Vivadent AG, 9494 Schaan (LI)
(72) Erfinder: Wachter, Wolfgang, 9494 Schaan (LI); Pokorny, Walter, 6719 Gais (AT); Rohner, Gottfried, 9450 Altstätten (CH); Grünenfelder, Robert, 9492 Eschen (LI)
(74) Vertreter: Baronetzky, Klaus

(56) Entgegenhaltungen:
- EP-A- 0 891 749
- WO-A-86/02259
- DE-A1- 10 324 404
- DE-B3- 10 327 892
- DE-C1- 10 208 801
- GB-A- 374 450
- US-A1- 2005 011 885

## Beschreibung

Die Erfindung betrifft eine Vorrichtung zur Herstellung von dentalmedizinischen Formteilen aus einem polymerisierbaren Kunststoff, gemäss dem Oberbegriff von Anspruch 1, sowie ein entsprechendes Verfahren gemäss dem Oberbegriff von Anspruch 24.

Derartige Verfahren und Vorrichtungen sind seit langem bekannt, wobei beispielhaft auf die US-PS 2,806,253 zu verweisen ist. Bei dieser Vorrichtung zur Herstellung von dentalmedizinischen Formteilen wird eine Küvette über eine Heizspirale erwärmt, nachdem polymerisierbares Material in die Küvette eingeführt wurde. Die Heizwirkung wird über eine Kühlwasserschlange kompensiert, mit welcher eine genaue und gezielte Steuerung der Polymerisation ermöglicht werden soll.

Dokument US 2005/011885 A1 beschreibt ein Mikrowellensystem, das zur Aushärtung polymerisierbarer Materialien intraoral zur lokalen Restauration beschädigter Zahnsubstanz einsetzbar ist.

Dokument WO 86/02259 A offenbart ein Verfahren zur Herstellung von Zahnprothesen oder Prothesenteilen aus polymerisierbarem Kunststoff. Der fließfähige Kunststoff wird in einen der Prothesenform entsprechenden, einerseits von einem Gipsmodell und andererseits von einem die Zahnaufstellung haltenden und die Freiflächen des Gipsmodells insgesamt umgebenden Formoberteil begrenzten Hohlraum eingebracht und in einer das Gipsmodell und das Formoberteil enthaltenden Küvette unter Druck in einem Polymerisationsgefäß polymerisiert.

Dokument DE 103 24 404 A1 ist auf ein Verfahren zur Herstellung von Objekten zum Zahnersatz oder Zahnteilersatz sowie auf einen Pressofen hierfür gerichtet. Der Presseofen umfasst ein Brennkammergehäuse, in dem eine Brennkammer ausgebildet ist. Die Brennkammer ist von seitlichen Isoliersteinen und isolierenden Decksteinen umgeben. Auf der Unterseite weist die Brennkammer eine Öffnung auf. In der Brennkammer ist ein Heizkörper angeordnet, der als Heizspirale ausgebildet und an der Innenseite der seitlichen Isoliersteine angeordnet ist. Es ist eine zentrale Durchtrittsöffnung vorgesehen, in die eine Muffel einfahren kann.

Dokument DE 103 27 892 B3 hat eine Vorrichtung zum Pressen von dentalkeramischer Masse für die Herstellung von Zahnersatz, wie Kronen, Brücken, Inlays sowie eine Kolben-Muffelanordnung für eine solche Vorrichtung zum Gegenstand. Die Vorrichtung weist ein Oberteil mit einer Brennkammer sowie ein mit einem Schlitten versehenes Unterteil auf, das längs einer Schiene zum Oberteil hin verfahrbar ist. Die keramische Masse befindet sich innerhalb einer Negativform auf dem Unterteil und ist von einer Muffel aufgenommen.

Dokument DE 102 08 801 C1 beschreibt einen Brennofen für das Brennen presskeramischen Zahnersatzes. Der Brennofen umfasst ein Brennofengehäuse, das von vier Säulen getragen in Distanz über einem Sockelgehäuse angeordnet ist. Das Brennofengehäuse besteht aus einer in dem Brennofengehäuse angeordneten Brennkammer und einem in diese von dem Sockelgehäuse aus liftartig einfahrbarem Träger für die Pressform. Nach Einbringen einer entsprechend bemessenen Presskeramikmasse in die Pressform wird die Pressform auf den Träger aufgesetzt und mit diesem in die Brennkammer eingefahren.

Dokument GB 374 450 ist auf eine Vorrichtung für die Herstellung von Zahnprothesen gerichtet. In einer ersten Kammer wird eine Zahnform mit Kunststoff zum Härten des Kunststoffs aufgenommen. Diese erste Kammer grenzt an eine zweite Kammer an und ist von dieser durch eine Trennwand abgeschnitten. Die zweite Kammer wird durch ein Heizelement erwärmt. Die Wärme der zweiten Kammer wärmt gleichmäßig die erste Kammer.

Dokument EP 0 891 749 A1 zeigt einen Brenngutteller, der auf einen Brennbereich angeordnet ist. Auf dem Brenngutteller befindet sich ein Brenngut, also ein Stoff, der durch Wärme gehärtet wird. Der Brenngutteller ist auf einer Brennplatte abgestellt und wird mit einer Brennhaube verschlossen.
Bei einer etwas neueren Entwicklung, wie beispielsweise aus der DE-OS 2 312 934 ersichtlich, wird kurzerhand die gesamte Küvette in heisses Wasser getaucht, wobei durch die Verwendung von Metallen für einen intensiven Wärmeübergang Sorge getragen ist.

Während die Qualität der beispielsweise durch die DE-OS-2 312 934 erzeugten Prothesen oder sonstigen Präzisions-Formteile aus Kunststoff gut ist, wäre es wünschenswert, ohne zusätzliche Ausrüstung wie den für das Heisswasserbad vorgesehenen Drucktopf auszukommen.

Daher liegt der Erfindung die Aufgabe zugrunde, eine Vorrichtung zur Herstellung von dentalmedizinischen Formteilen gemäss dem Oberbegriff von Anspruch 1 sowie ein entsprechendes Verfahren gemäss dem Oberbegriff von Anspruch 24 zu schaffen, die eine verbesserte und einfachere Herstellung der dentalmedizinischen Formteile ermöglichen, ohne dass die Gefahr einer unkontrollierten Polymerisation des eingebrachten polymerisierbaren Kunststoffs besteht.

Diese Aufgabe wird erfindungsgemäss durch Anspruch 1 bzw. 24 gelöst. Vorteilhafte Weiterbildungen ergeben sich aus den Unteransprüchen.

Erfindungsgemäss besonders günstig ist es, dass die Heizvorrichtung als Ganzes von der Küvette entfernbar ist. Erfindungsgemäss ist es besonders günstig, wenn die Heizvorrichtung eingeschaltet oder aktiviert wird, wenn das Befüllen mit polymiersierbarem Kunststoff bereist stattgefunden hat. Eine zu frühzeitige Polymerisation kann hierdurch sicher unterbunden werden, wobei die Möglichkeit besteht, die Polymerisation durch Einschalten der Heizvorrichtung nach vollständiger Befüllung zu starten, oder aber die Heizvorrichtung vorzuheizen und die Küvette dann in der Heizstellung, in der sie in Wärmeleitverbindung mit der Heizvorrichtung steht, aufzuheizen, und zwar bevorzugt beginnend an einer Stelle, die der Einlassöffnung für den zu polymerisierenden Kunststoff gegenüberliegt.

Diese Lösung hat den Vorteil, dass auch bei bereits aufgeheizter Heizvorrichtung gezielt lediglich die gewünschte Wärmeenergie zuführbar ist, wobei durch das Gegenüberliegen von Heizung und Einlassöffnung sichergestellt werden kann, dass kein fehlerhaftes Formteil aufgrund von Wärmeschrumpfung entsteht.

Bevorzugt wirkt die Heizvorrichtung mit einer Seite der Küvette zusammen, die einer Einfüllöffnung der Küvette gegenüberliegt. Die Küvette lässt sich in beliebiger geeigneter Weise mit oder ohne Spannvorrichtung in Form halten. Beispielsweise können sich die beiden Küvettenformschalen über einen mechanischen Verschluss zusammengehalten werden bevor diese von der Spannvorrichtung fester aufeinandergedrückt werden.

Während das Verschwenken der Heizvorrichtung eine rasche Abkühlung der Küvette ermöglicht, da dann die Wärmezufuhr unterbrochen ist und Kühlluft außen an den Wärmeübertrittsflächen entlang streichen kann, ist es auch möglich, die Küvette vollständig aus der Heizvorrichtung zu entfernen.

Besonders günstig ist es, wenn die Heizvorrichtung die Form eines U hat und außen die Küvette umgibt. An sich ist einerseits eine gleichmäßige Erhitzung von einer Seite der Küvette gewährleistet, andererseits jedoch die Trennung zwischen Küvette und Heizvorrichtung besonders leicht zu realisieren. Insofern ermöglicht es die erfindungsgemäße Lösung auch, die Vorteile der Heißpolymerisation mit der verbesserten Materialqualität und der Kaltpolymerisation mit der kurzen Prozesszeit zu vereinigen.

Erfindungsgemäß besonders günstig ist es aber, dass die Heizvorrichtung auch günstigerweise der Einlassöffnung für das Kunststoffmaterial gegenüberliegend angeordnet sein kann. Hierdurch ist gewährleistet, dass die Polymerisation zunächst an Stellen der Küvette erfolgt, die von der Einlassöffnung fern sind. Insofern erfolgt durch das Nachpressen automatisch eine Kompensation des chemischen Schrumpfens während der Polymerisation. Dadurch wird eine optimale Passung des Prothesenkörpers im Mund des Patienten erreicht.

Erfindungsgemäß besonders günstig ist es, dass in der Ruhestellung die Küvette dem Aufnahmebereich ungehindert zuführbar ist und aus diesem ungehindert entnehmbar ist.

Erfindungsgemäß besonders günstig ist es, dass die Heizvorrichtung in der Heizstellung die Küvette mindestens teilweise umgibt, insbesondere nach der Art eines U im Wesentlichen von oben kommend, und insbesondere an dieser anliegt.

Erfindungsgemäß besonders günstig ist es, dass die Heizvorrichtung schwenkbar und/oder verschiebbar an einem Gehäuse, das den Aufnahmebereich und die Heizvorrichtung aufnimmt, insbesondere mit Hilfe einer Antriebsvorrichtung, schenkbar und/oder verschiebbar gelagert ist.

Erfindungsgemäß besonders günstig ist es, dass die Heizvorrichtung zwei Schenkel aufweist, die im Wesentlichen den Seitenschenkeln eines eines U entsprechen, und gegebenenfalls etwas von einander divergieren und dass insbesondere die Schenkel der Heizvorrichtung relativ zueinander verschwenkbar, sowie insbesondere zum Entnehmen der Küvette, auseinander schwenkbar sind.

Erfindungsgemäß besonders günstig ist es, dass die Heizvorrichtung wenigstens der Küvette zugewandten Reflektor aufweist.

Erfindungsgemäß besonders günstig ist es, dass die Heizvorrichtung einer Einlassöffnung der Küvette im Wesentlichen gegenüberliegend angeordnet ist, wenn die Heizstellung erreicht ist.

Erfindungsgemäß besonders günstig ist es, dass die Heizvorrichtung ein Heizelement aufweist, dem elektrische Energie zugeführt wird.

Erfindungsgemäß besonders günstig ist es, dass das Heizelement von wenigstens einem elektrischen Heizstab gebildet ist. Erfindungsgemäß besonders günstig ist es, dass das Heizelement Heissluft erzeugt.

Erfindungsgemäß besonders günstig ist es, dass in einer Vorrichtung eine Einlassöffnung der Küvette von einem Wärmeisolator umgeben ist, der eine Wärmedämmung für den dort einströmenden, polymerisierbaren Kunststoff gegenüber gut wärmeleitenden Bereichen der Küvette, insbesondere den Küvettenformschalen ermöglichen.

Erfindungsgemäß besonders günstig ist es, dass in einer Vorrichtung die Küvette insbesondere zwei Küvettenformschalen aufweist, die mit Hilfe einer Spannvorrichtung aufeinander pressbar sind, und dass insbesondere die beiden Küvettenformschalen mit Hilfe wenigstens eines mechanischen Verschlusses zusammenhaltbar sind.

Erfindungsgemäß besonders günstig ist es, dass in einer Vorrichtung die Spannvorrichtung wenigstens einen Spannhebel, mindestens eine mit einer Küvettenformschale zusammenwirkende Spannbacke und ein Spannelement aufweist, insbesondere in Form eines pneumatischen und/oder hydraulich und/oder elektrisch betriebenden Spannzylinders.

Erfindungsgemäß besonders günstig ist es, dass der Spannhebel im Gehäuse schwenkbeweglich gelagert ist und insbesondere an seinem Lastarm Spannbacken und an seinem Kraftarm das Spannelement angelenkt sind.

Erfindungsgemäß besonders günstig ist es, dass die Spannvorrichtung zwei Spannhebel aufweist, die mit je einer Spannbacke die beiden Küvettenformschalen aufeinander pressen und gemeinsam mit einem Spannelement zusammenwirken.

Erfindungsgemäß besonders günstig ist es, dass die Spannvorrichtung einen Spannrahmen aufweist, an dem mindestens ein Spannhebel gelagert ist, und dass der Spannhebel insbesondere als einarmiger Hebel aufgebildet ist.

Erfindungsgemäß besonders günstig ist es, dass in einer Vorrichtung die beiden freien Enden der Spannhebel über eine Zugstange, insbesondere eines Spannrahmens, miteinander zusammenwirken.

Erfindungsgemäß besonders günstig ist es, dass die Küvette über die eine Einlassöffnung im Wesentlichen vertikal von unten, mit polymerisierbarem Kunststoff befüllbar ist und dass der polymerisierbare Kunststoff mit Hilfe einer Einpressvorrichtung in die Küvette einpressbar ist. Die Befüllung kann aber auch in horizontaler Richtung oder von oben nach unten erfolgen.

Erfindungsgemäß besonders günstig ist es, dass in einer Vorrichtung der Einlassöffnung im Wesentlichen gegenüberliegend an der Küvette ein Entlüftungskanal angeordnet ist.

Erfindungsgemäß besonders günstig ist es, dass in einer Vorrichtung der Entlüftungskanal über eine Unterdruck erzeugende Vorrichtung unter Unterdruck setzbar ist, insbesondere vor dem Einpressen des polymerisierbaren Kunststoffs.

Erfindungsgemäß besonders günstig ist es, dass in einer Vorrichtung die Vorrichtung eine Steuereinheit aufweist, über welche die Steuerung der Relativbewegung, der Heizvorrichtung und/oder des Spannelements und/oder die Heizung der Heizvorrichtung, die unter Unterdruck setzbare Vorrichtung und/oder die Einpressvorrichtung programmsteuerbar ist.

Erfindungsgemäß besonders günstig ist es, dass die Küvette in einen Aufnahmebereich einsetzbar ist, wobei eine Heizvorrichtung relativ zu der Küvette bewegbar ist und in einer von einer Ruhestellung beabstandeten Heizstellung die Heizvorrichtung die Küvette aufheizt.

Erfindungsgemäß besonders günstig ist es, dass anschließend an die Befüllung die Heizvorrichtung eingeschaltet wird und die Küvette ausgehend von ihrer der Einlassöffnung für den polymerisierbaren Kunststoff gegenüberliegenden Seite erwärmt wird.

Erfindungsgemäß besonders günstig ist es, dass der Einpressdruck aufrecht erhalten wird, während die Heizvorrichtung eingeschaltet und der Kunststoff polymerisiert wird, wobei insbesondere das Polymerisationsschrumpfen durch nachgepressten Kunststoff kompensiert wird.

Erfindungsgemäß besonders günstig ist es, dass die Regelung der Temperatur der Küvette elektronisch erfolgt.

Erfindungsgemäß besonders günstig ist es, dass die Temperaturerfassung über einen Temperatursensor erfolgt, der in direktem oder berührungslosen Kontakt mit der Küvette steht.

Erfindungsgemäß besonders günstig ist es, dass der Temperatursensor an der Vorrichtung, insbesondere der Heizvorrichtung angeordnet ist.

Erfindungsgemäß besonders günstig ist es, dass der Temperatursensor von der direkten Wärmestrahlung der Heizvorrichtung geschützt ist.

Erfindungsgemäß besonders günstig ist es, dass der Temperatursensor mit der Kraft einer Feder gegen die Küvette gedrückt wird.

Erfindungsgemäß besonders günstig ist es, dass eine Spannvorrichtung Küvettenformschalen der Küvette vor dem Einpressen des polymerisierbarem Kunststoffs fest aufeinander presst und das insbesondere die Spannvorrichtung erst nach dem Abschalten der Heizvorrichtung und der Abschaltung der Einpressvorrichtung gelöst wird.

Erfindungsgemäß besonders günstig ist es, dass die Heizvorrichtung vor ihrem Einschalten von einer Ruhestellung in eine Heizstellung verschwenkt und/oder versetzt wird und nach ihrem Abschalten wieder in die Ruhestellung zurück verbracht wird.

Erfindungsgemäß besonders günstig ist es, dass der Einlassöffnung im Wesentlichen gegenüberliegend an der Küvette eine Entlüftungskanal angeordnet ist und dass der Entlüftungskanal über eine Unterdruck erzeugende Vorrichtung unter Unterdruck setzbar ist, insbesondere vor dem Einpressen des polymierisierbaren Kunststoffs.

Weitere Vorteile, Einzelheiten und Merkmale ergeben sich aus der nachstehenden Beschreibung der Erfindung anhand der Zeichnung.

Es zeigen:

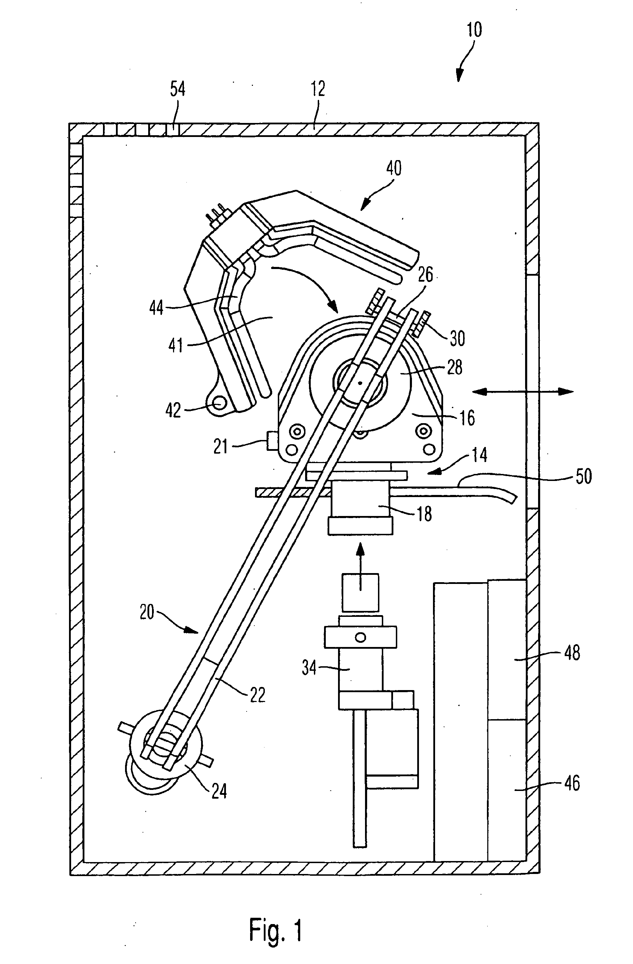

Fig. 1 eine schematische Ansicht einer erfindungsgemäßen Vorrichtung zur Herstellung von dentalmedizinischen Formteilen in einer Ausführungsform.

Die aus Fig. 1 ersichtliche Vorrichtung 10 zur Herstellung von dentalmedizinischen Formteilen aus polymerisierbarem Kunststoff weist ein Gehäuse 12 mit einem Aufnahmebereich 41 für eine Küvette 16 auf. Das Gehäuse 12 nimmt eine Küvette 16 auf, die knapp hinter einer Bedienöffnung 14 gelagert ist, wobei die Küvette 16 für das Spritzgießen bzw. Einpressen eines Dentalformteils wie einer Prothese bestimmt ist. Die Küvette 16 ist aus zwei Küvettenformschalen ausgebildet, die in dem dargestellten Ausführungsbeispiel über einen Spannmechanismus 21 zusammengehalten und eine Spannvorrichtung 20 aufeinander drückbar sind. Hierzu weist die Spannvorrichtung 20, die ebenfalls in dem Gehäuse 12 aufgenommen ist, zwei Spannhebel 22 auf, die über einen Spannzylinder 24 als Spannelement betätigbar ist. In Figur 1 ist lediglich einer der beiden Spannhebel 22 dargestellt, während der andere hinter der Zeichnungsebene angeordnet ist.

Die Spannhebel 22 sind um eine Schwenkachse 26 schwenkbeweglich gelagert, und der Schwenkachse 26 benachbart sind Spannbacken 28 vorgesehen, die auf die Küvettenformschalen drücken. Die Drehachsen 26 sind je starr in dem Gehäuse gelagert.

Auch wenn hier die Spannhebel 22 als einarmige Hebel ausgebildet sind, versteht es sich, dass anstelle dessen die Realisierung eines zweiarmigen Hebels möglich ist.

Zwischen den beiden Spannhebeln erstreckt sich, je an der Drehachse 26 angelenkt, eine Zugstange 30, welche die auf die freien Enden der Spannhebel 22 wirkenden Zugkräfte aufnimmt.

Durch die starke Hebeluntersetzung lässt sich über die Spannzylinder 24 auf die Küvettenformschalen ein starker Druck ausüben, wobei der Druck von 2000 N bis 25000 N, insbesondere ein Druck zwischen 5000 N und 15000, betragen kann.

Die Küvette 16 weist eine nach unten hin offene Einlassöffnung, die mit einer sich unter der Einlassöffnung 18 erstreckenden sowie und einen vertikal beweglichen Kolben aufweisenden Einpressvorrichtung 34 zusammen wirkt. Über die Einpressvorrichtung 34 lässt sich der polymerisierbare Kunststoff in den Hohlraum der Küvette 16 einpressen. Die Einpressvorrichtung 34 weist einen hiefür geeigneten Druckzylinder auf.

Die Küvette 16 ist aus der in Figur 1 dargestellten Ruhestellung in eine Heizstellung bringbar. Die Heizvorrichtung 40 weist hierzu ein Heizelement 43 auf, dessen Wärmeenergie über einen Reflektor 44 der Küvette 16 zugeleitet wird. Bevorzugt erfolgt der Wärmeübergang über Wärmestrahlung, wobei es sich versteht, dass auch über einen thermischen Kontakt eine direkte Anlage ein guter Wärmeübergang erzielbar ist.

Während die Küvette 16 im Wesentlichen ein stabiles Metallgehäuse aufweist, das beispielsweise auch aus Aluminium bestehen kann, besteht der Bereich der Einlassöffnung 18 mindestens mit wärmedämmendem aber wärmefesten Kunststoffmaterial.

Erfindungsgemäß erstreck sich die Heizvorrichtung 40 zu der oberen Außenseite der Küvette 16 passend. Die Heizvorrichtung 40 ist an einer Schwenkachse 42 des Gehäuses schwenkbar gelagert. Die Lagerung erfolgt so, dass in dem in Fig. 1 dargestellten, nicht aktiven Zustand, die Küvette 16 bei gelöster Spannvorrichtung 20 frei beweglich ist und beispielsweise durch die Bedienöffnung 14 entnommen werden kann. Demgegenüber ist die Heizvorrichtung 40 auch in eine Position schwenkbar, in der sie aktiv ist und in der sie die Küvette 16 an ihrer Oberseite und ihren schrägen Seitenflanken grossflächig umgibt. Hierbei kann die Heizvorrichtung 40 auch direkt an dem Metall der Küvette 16 anliegen. Die Küvette 16 ist dabei in der Spannvorrichtung 20 eingespannt.

Ausgehend von der seitlichen Bedienöffnung 14 im Gehäuse 12 erstreckt sich eine Führungsschiene 50 für die Küvette bis zum Aufnahmebereich 41.

Die Heizvorrichtung 40 und der Spannzylinder 24 werden über eine Steuereinheit 46 gesteuert, die in dem Gehäuse 12 aufgenommen ist. Über eine ebenfalls am Gehäuse angeordnete Bedienanordnung 48 lässt sich die erfindungsgemäße Vorrichtung steuern.

Erfindungsgemäß ist es vorgesehen, dass die Heizvorrichtung 40 nach Abschluss des Einpressvorgangs ausgeschaltet und dann einige Sekunden später weggeschwenkt wird, damit die Küvette 16 abkühlen kann. Die Heizvorrichtung 40 ist dann immer noch etwas warm.

Die Verschwenkung der Heizvorrichtung muss erfindungsgemäß lediglich um einen geringen Betrag erfolgen, beispielsweise 20° bis 50° und bevorzugt etwa um 35°. Dies reicht für die thermische und räumliche Trennung von der Küvette 16 und für die leichte Entnahme der Küvette 16 aus.

## Patentansprüche

1. Vorrichtung zur Herstellung von dentalmedizinischen Formteilen aus einem polymerisierbaren Kunststoff, mit
einer Küvette und
einer Heizvorrichtung für das Aufheizen des polymerisierbaren Kunststoffs in der Küvette,
wobei
die Vorrichtung einen Aufnahmebereich (41) für wenigstens eine Küvette (16) aufweist und,
die Heizvorrichtung (40) und die Küvette (16) relativ zueinander beweglich sind, zwischen einer Ruhestellung und einer Heizstellung, **dadurch gekennzeichnet, dass**
die Heizvorrichtung (40) an einem Gehäuse, das den Aufnahmebereich (41) und die Heizvorrichtung (40) aufnimmt, schwenkbar und/oder verschiebbar gelagert ist, insbesondere mit Hilfe einer Antriebsvorrichtung,
wobei die Heizvorrichtung (40) in der Heizstellung die Küvette (16), insbesondere über Wärmestrahlung, erwärmt.

2. Vorrichtung nach Anspruch 1, **dadurch gekennzeichnet, dass** in der Ruhestellung die Küvette (16) dem Aufnahmebereich (41) ungehindert zuführbar ist und aus diesem ungehindert entnehmbar ist.

3. Vorrichtung nach einem der vorhergehenden Ansprüche, **dadurch gekennzeichnet, dass** die Heizvorrichtung (40) in der Heizstellung die Küvette (16) mindestens teilweise umgibt, im Wesentlichen von oben kommend.

4. Vorrichtung nach einem der vorhergehenden Ansprüche, **dadurch gekennzeichnet, dass** die Heizvorrichtung (40) zwei Schenkel aufweist, die relativ zueinander verschwenkbar sind.

5. Vorrichtung nach einem der vorhergehenden Ansprüche, **dadurch gekennzeichnet, dass** die Heizvorrichtung (40) einer Einlassöffnung (18) der Küvette (16) im Wesentlichen gegenüberliegend angeordnet ist, wenn die Heizstellung erreicht ist.

6. Vorrichtung nach einem der vorhergehenden Ansprüche, **dadurch gekennzeichnet, dass** die Heizvorrichtung (40) ein Heizelement aufweist, dem elektrische Energie zugeführt wird.

7. Vorrichtung nach einem der vorhergehenden Ansprüche, **dadurch gekennzeichnet, dass** das Heizelement von wenigstens einem elektrischen Heizstab gebildet ist.

8. Vorrichtung nach einem der vorhergehenden Ansprüche, **dadurch gekennzeichnet, dass** das Heizelement Heißluft erzeugt.

9. Vorrichtung nach einem der vorhergehenden Ansprüche, **dadurch gekennzeichnet, dass** eine Einlassöffnung (18) der Küvette (16) von einem Wärmeisolator umgeben ist, der eine Wärmedämmung für den dort einströmenden, polymerisierbaren Kunststoff gegenüber gut wärmeleitenden Bereichen der Küvette (16), insbesondere den Küvettenformschalen ermöglichen.

10. Vorrichtung nach einem der vorhergehenden Ansprüche, **dadurch gekennzeichnet, dass** die Küvette (16) insbesondere zwei Küvettenformschalen aufweist, die mit Hilfe einer Spannvorrichtung (20) aufeinander pressbar sind, und dass insbesondere die beiden Küvettenformschalen mit Hilfe wenigstens eines mechanischen Verschlusses zusammenhaltbar sind.

11. Vorrichtung nach einem der vorhergehenden Ansprüche, **dadurch gekennzeichnet, dass** die Spannvorrichtung (20) wenigstens einen Spannhebel (22), mindestens eine mit einer Küvettenformschale zusammenwirkende Spannbacke (28) und ein Spannelement aufweist, insbesondere in Form eines pneumatischen und/oder hydraulisch und/oder elektrisch betriebenden Spannzylinders (24).

12. Vorrichtung nach einem der vorhergehenden Ansprüche, **dadurch gekennzeichnet, dass** der Spannhebel (22) im Gehäuse (12) schwenkbeweglich gelagert ist und insbesondere an seinem Lastarm Spannbacken (28) und an seinem Kraftarm das Spannelement (24) angelenkt sind.

13. Vorrichtung nach einem der vorhergehenden Ansprüche, **dadurch gekennzeichnet, dass** die Spannvorrichtung (20) zwei Spannhebel (22) aufweist, die mit je einer Spannbacke (28) die beiden Küvettenformschalen aufeinander pressen und gemeinsam mit einem Spannelement zusammenwirken.

14. Vorrichtung nach einem der vorhergehenden Ansprüche, **dadurch gekennzeichnet, dass** die Spannvorrichtung (20) einen Spannrahmen aufweist, an dem mindestens ein Spannhebel (22) gelagert ist, und dass der Spannhebel (22) insbesondere als einarmiger Hebel aufgebildet ist.

15. Vorrichtung nach einem der vorhergehenden Ansprüche, **dadurch gekennzeichnet, dass** die beiden freien Enden der Spannhebel (22) über eine Zugstange (30), insbesondere eines Spannrahmens, miteinander zusammenwirken.

16. Vorrichtung nach einem der vorhergehenden Ansprüche, **dadurch gekennzeichnet, dass** die Küvette (16) über die Einlassöffnung im Wesentlichen vertikal von unten, mit polymerisierbarem Kunststoff befüllbar ist und dass der polymerisierbare Kunststoff mit Hilfe einer Einpressvorrichtung (34) in die Küvette (16) einpressbar ist.

17. Vorrichtung nach einem der vorhergehenden Ansprüche, **dadurch gekennzeichnet, dass** der Einlassöffnung (18) im Wesentlichen gegenüberliegend an der Küvette (16) ein Entlüftungskanal angeordnet ist.

18. Vorrichtung nach einem der vorhergehenden Ansprüche, **dadurch gekennzeichnet, dass** die Vorrichtung eine Steuereinheit (46) aufweist, über welche die Steuerung der Relativbewegung, der Heizvorrichtung und/oder des Spannelements und/oder die Heizung der Heizvorrichtung und/oder die Einpressvorrichtung programmsteuerbar ist.

19. Vorrichtung nach einem der vorhergehenden Ansprüche, **dadurch gekennzeichnet, dass** die Regelung der Temperatur der Küvette (16) elektronisch erfolgt.

20. Vorrichtung nach einem der vorhergehenden Ansprüche, **dadurch gekennzeichnet, dass** die Temperaturerfassung über einen Temperatursensor erfolgt, der in direktem oder berührungslosem Kontakt mit der Küvette (16) steht.

21. Vorrichtung nach einem der vorhergehenden Ansprüche, **dadurch gekennzeichnet, dass** der Temperatursensor an der Vorrichtung, insbesondere der Heizvorrichtung (40) angeordnet ist.

22. Vorrichtung nach einem der vorhergehenden Ansprüche, **dadurch gekennzeichnet, dass** der Temperatursensor von der direkten Wärmestrahlung der Heizvorrichtung (40) geschützt ist.

23. Vorrichtung nach einem der vorhergehenden Ansprüche, **dadurch gekennzeichnet, dass** der Temperatursensor mit der Kraft einer Feder gegen die Küvette (16) gedrückt wird.

24. Verfahren zur Herstellung von dentalmedizinischen Formteilen aus polymerisierbarem Kunststoff, mit Hilfe einer Küvette, die über eine Einpressvorrichtung mit polymerisierbarem Kunststoff befüllbar ist, wobei die Küvette (16) in einen Aufnahmebereich einsetzbar ist, **dadurch gekennzeichnet, dass** eine Heizvorrichtung (40) an einem Gehäuse, das den Aufnahmebereich (41) und die Heizvorrichtung (40) aufnimmt, relativ zu der Küvette (16) schwenkbar und/oder verschiebbar gelagert bewegbar ist und in einer von einer Ruhestellung beabstandeten Heizstellung die Heizvorrichtung (40) die Küvette (16) aufheizt.

25. Verfahren nach Anspruch 24 zur Herstellung von dentalmedizinischen Formteilen aus polymerisierbarem Kunststoff, wobei eine Küvette über eine Einpressvorrichtung mit polymerisierbarem Kunststoff befüllbar ist, insbesondere bei Raumtemperatur befüllbar ist, **dadurch gekennzeichnet, dass** anschließend an die Befüllung die Heizvorrichtung (40) eingeschaltet wird und die Küvette (16) ausgehend von ihrer der Einlassöffnung für den polymerisierbaren Kunststoff gegenüberliegenden Seite erwärmt wird.

26. Verfahren nach Anspruch 24 oder 25, **dadurch gekennzeichnet, dass** der Einpressdruck aufrecht erhalten wird, während die Heizvorrichtung (40) eingeschaltet und der Kunststoff polymerisiert wird, wobei insbesondere das Polymerisationsschrumpfen durch nachgepressten Kunststoff kompensiert wird.

27. Verfahren nach einem der Ansprüche 24 bis 26, **dadurch gekennzeichnet, dass** die Heizvorrichtung nach der Polymerisation abgeschaltet ist und ihre Ruhestellung verschwenkt und/oder versetzt wird.

28. Verfahren nach einem der Ansprüche 24 bis 27, **dadurch gekennzeichnet, dass** eine Spannvorrichtung Küvettenformschalen der Küvette vor dem Einpressen des polymerisierbarem Kunststoffs fest aufeinanderpresst und dass insbesondere die Spannvorrichtung erst nach dem Abschalten der Heizvorrichtung (40) und der Abschaltung der Einpressvorrichtung gelöst wird.

## Claims

1. A device for the production of dental molded parts from a polymerizable plastic, said device comprising:
a cuvette and
a heating device for heating the polymerizable plastic in the cuvette,
said device comprising a receiving area (41) for at least one cuvette (16), and
the heating device (40) and the cuvette (16) being movable relative to one another between a rest position and a heating position,
wherein the heating device (40) is pivotably and/or slidably mounted on a housing that receives the receiving area (41) and the heating device (40), in particular by means of a drive unit,
said heating device (40) heating the cuvette (16) in the heating position, in particular by heat radiation.

2. The device as claimed in claim 1, wherein, in the rest position, the cuvette (16) can be delivered to the receiving area (41) unimpeded and can be removed from it unimpeded.

3. The device as claimed in one of the preceding claims, wherein, in the heating position, the heating device (40) at least partially encloses the cuvette (16), substantially from above.

4. The device as claimed in one of the preceding claims, wherein the heating device (40) has two branches that are pivotable relative to one another.

5. The device as claimed in one of the preceding claims, wherein the heating device (40) is arranged so as to be arranged substantially opposite an inlet opening (18) of the cuvette (16) when the heating position is reached.

6. The device as claimed in one of the preceding claims, wherein the heating device (40) comprises a heating element to which electrical energy is supplied.

7. The device as claimed in one of the preceding claims, wherein the heating element is formed by at least one electrical heating rod.

8. The device as claimed in one of the preceding claims, wherein the heating element generates hot air.

9. The device as claimed in one of the preceding claims, wherein an inlet opening (18) of the cuvette (16) is surrounded by a heat insulator permitting heat insulation for the polymerizable plastic flowing in there compared to good heat-conducting areas of the cuvette (16), in particular the cuvette mould shells.

10. The device as claimed in one of the preceding claims, wherein the cuvette (16) in particular has two cuvette mould shells which can be pressed onto one another with the aid of a clamping device (20), and wherein in particular the two cuvette mould shells can be held together with the aid of at least one mechanical fastener.

11. The device as claimed in one of the preceding claims, wherein the clamping device (20) has at least one clamping lever (22), at least one clamping jaw (28) interacting with a cuvette mould shell, and a clamp element, in particular in the form of a pneumatically and/or hydraulically and/or electrically operating clamp cylinder (24).

12. The device as claimed in one of the preceding claims, wherein the clamping lever (22) is mounted pivotably in the housing (12), and, in particular, clamping jaws (28) are articulated on its work arm, and the clamp element (24) is articulated on its power arm.

13. The device as claimed in one of the preceding claims, wherein the clamping device (20) comprises two clamping levers (22) which, each with a clamping jaw (28), press the two cuvette mould shells onto one another and jointly interact with a clamp element.

14. The device as claimed in one of the preceding claims, wherein the clamping device (20) has a clamping frame on which at least one clamping lever (22) is mounted, and wherein the clamping lever (22) is designed in particular as a one-arm lever.

15. The device as claimed in one of the preceding claims, wherein the two free ends of the clamping levers (22) interact with one another via a tie rod (30), in particular of a clamping frame.

16. The device as claimed in one of the preceding claims, wherein the cuvette (16) can be filled with polymerizable plastic through the inlet opening, substantially vertically from below, and wherein the polymerizable plastic can be pressed into the cuvette (16) with the aid of an injection device (34).

17. The device as claimed in one of the preceding claims, wherein an air release channel is arranged so as to be lying substantially opposite the inlet opening (18) on the cuvette (16).

18. The device as claimed in one of the preceding claims, wherein the device has a control unit (46) for program control of the relative movement, the heating device and/or the clamp element and/or the heating of the heating device and/or the injection device.

19. The device as claimed in one of the preceding claims, wherein the temperature of the cuvette (16) is regulated electronically.

20. The device as claimed in one of the preceding claims, wherein the temperature is detected by a temperature sensor which is in direct or indirect contact with the cuvette (16).

21. The device as claimed in one of the preceding claims, wherein the temperature sensor is arranged on the device, in particular on the heating device (40).

22. The device as claimed in one of the preceding claims, wherein the temperature sensor is protected from the direct heat radiation of the heating device (40).

23. The device as claimed in one of the preceding claims, wherein the temperature sensor is pressed against the cuvette (16) by the force of a spring.

24. A method for the production of dental molded parts from polymerizable plastic, with the aid of a cuvette that can be filled with polymerizable plastic via an injection device, wherein the cuvette (16) can be inserted into a receiving area, **characterized in that** a heating device (40) is mounted on a housing that receives the receiving area (41) and the heating device (40), so as to be pivotably and/or slidably movable relative to the cuvette (16) and, in a heating position distanced from a rest position, the heating device (40) heats the cuvette (16).

25. A method for the production of dental molded parts from polymerizable plastic as claimed in claim 24, a cuvette being able to be filled with polymerizable plastic via an injection device, in particular at room temperature, wherein the heating device (40) is switched on after the filling operation, and the cuvette (16) is heated starting from its side lying opposite the inlet opening for the polymerizable plastic.

26. The method as claimed in claim 24 or 25, wherein the injection pressure is maintained while the heating device (40) is switched on and the plastic is being polymerized, with the polymerization shrinkage being compensated in particular by more plastic being further pressed in.

27. The method as claimed in one of claims 24 through 26, wherein the heating device is switched off after the polymerization and is pivoted and/or displaced into its rest position.

28. The method as claimed in one of claims 24 through 27, wherein a clamping device presses the cuvette mould shells of the cuvette firmly onto one another before injection of the polymerizable plastic, and wherein in particular the clamping device is released only after the heating device (40) has been switched off and the injection device has been switched off.

## Revendications

1. Dispositif pour la fabrication de pièces moulées médicales dentaires en matière plastique polymérisable, avec une cuvette et un dispositif de chauffage pour le réchauffement de la matière plastique polymérisable dans la cuvette, où le dispositif présente une zone d'admission (41) pour au moins une cuvette (16) et où le dispositif de chauffage (40) et les cuvettes (16) sont mobiles l'un par rapport aux autres, entre une position de repos et une position de chauffage, **caractérisé en ce que** le dispositif de chauffage (40) est logé orientable et/ou déplaçable sur un boîtier qui accueille le secteur d'admission (41) et le dispositif de chauffage (40), de préférence à l'aide d'un dispositif de commande, où le dispositif de chauffage (40) chauffe la cuvette (16) en position de chauffage, prend, de préférence par des rayonnements de chaleur.

2. Dispositif selon la revendication 1, **caractérisé en ce qu'**en position de repos, la cuvette (16) peut être conduit sans encombre vers la zone d'admission (41) et enlevé sans encombre de celui-ci.

3. Dispositif selon l'une des revendications précédentes, **caractérisé en ce que** le dispositif de chauffage (40) en position de chauffage entoure la cuvette (16) au moins en partie, essentiellement depuis le haut.

4. Dispositif selon l'une des revendications précédentes, **caractérisé en ce que** le dispositif de chauffage (40) présente deux branches qui sont orientables l'une par rapport à l'autre.

5. Dispositif selon l'une des revendications précédentes, **caractérisé en ce que** le dispositif de chauffage (40) est disposé essentiellement en face d'un orifice d'admission (18) de la cuvette (16), quand la régulation de la chaleur est atteinte.

6. Dispositif selon l'une des revendications précédentes, **caractérisé en ce que** le dispositif de chauffage (40) présente un élément de chauffage vers lequel est conduite de l'énergie électrique.

7. Dispositif selon l'une des revendications précédentes, **caractérisé en ce que** l'élément de chauffage est formé d'au moins une cartouche chauffante électrique.

8. Dispositif selon l'une des revendications précédentes, **caractérisé en ce que** l'élément de chauffage produit de l'air chaud.

9. Dispositif selon l'une des revendications précédentes, **caractérisé en ce qu'**un orifice d'admission (18) de la cuvette (16) est entouré par un isolateur calorifuge qui permet une isolation thermique pour la matière plastique polymérisable qui afflue à cet endroit par rapport à des zones bien conductrices de chaleur de la cuvette (16), notamment les carapaces de moule de la cuvette.

10. Dispositif selon l'une des revendications précédentes, **caractérisé en ce que** la cuvette (16) présente de préférence deux carapaces de moule de cuvette appuyables l'une sur l'autre à l'aide d'un tendeur (20), et que de préférence au moins à l'aide d'une fermeture mécanique les deux carapaces de moule de cuvette sont maintenables ensemble en position.

11. Dispositif selon l'une des revendications précédentes, **caractérisé en ce que** le tendeur (20) présente au moins un levier de tension (22), au moins un levier de tension (26), coopérant avec une carapace de moule de cuvette, et un élément de tension, de préférence sous forme de cylindre de serrage (24) pneumatique et/ou hydraulique et/ou électrique.

12. Dispositif selon l'une des revendications précédentes, **caractérisé en ce que** le levier de tension (22) est logé orientable dans le boîtier (12) et que de préférence des mâchoires de tension (28) sont articulées à son bras de levier et l'élément de tension (24) est articulé à son bras de puissance.

13. Dispositif selon l'une des revendications précédentes, **caractérisé en ce que** le tendeur (20) présente deux leviers de tension (22) qui appuient avec une mâchoire de tension (28) chacun les deux carapaces de moule de cuvette l'une sur l'autre et agissent ensemble avec un élément de tension.

14. Dispositif selon l'une des revendications précédentes, **caractérisé en ce que** le tendeur (20) présente un cadre de tension, sur lequel au moins un levier de tension (22) est logé, et que le levier de tension (22) est configuré de préférence comme levier à bras unique.

15. Dispositif selon l'une des revendications précédentes, **caractérisé en ce que** les deux extrémités libres des leviers de tension (22) coopèrent ensemble sur une barre de traction (30), de préférence d'un cadre de tension.

16. Dispositif selon l'une des revendications précédentes, **caractérisé en ce que** la cuvette (16) est remplissable avec de la matière plastique polymérisable par l'orifice d'admission essentiellement verticalement par en bas, et que la matière plastique polymérisable est injectable dans la cuvette (16) à l'aide d'un dispositif d'injection (34).

17. Dispositif selon l'une des revendications précédentes, **caractérisé en ce qu'**un canal d'aération est disposé sur la cuvette (16) en face essentiellement de l'orifice d'admission (18).

18. Dispositif selon l'une des revendications précédentes, **caractérisé en ce que** le dispositif présente un module de commande (46), par lequel la commande du mouvement relatif du dispositif de chauffage et/ou de l'élément de tension et/ou le chauffage du dispositif de chauffage et/ou le dispositif d'injection est réglable par programmes.

19. Dispositif selon l'une des revendications précédentes, **caractérisé en ce que** le réglage de la température de la cuvette (16) s'effectue électroniquement.

20. Dispositif selon l'une des revendications précédentes, **caractérisé en ce que** la saisie de température s'effectue par une sonde de température en contact direct ou sans contact avec la cuvette (16).

21. Dispositif selon l'une des revendications précédentes, **caractérisé en ce que** la sonde de température est disposée sur le dispositif, de préférence sur le dispositif de chauffage (40).

22. Dispositif selon l'une des revendications précédentes, **caractérisé en ce que** la sonde de température est protégée du rayonnement de chaleur direct du dispositif de chauffage (40).

23. Dispositif selon l'une des revendications précédentes, **caractérisé en ce que** la sonde de température est appuyée contre la cuvette (16) avec la force d'un ressort.

24. Procédure de fabrication de pièces moulées médicales dentaires en matière plastique polymérisable, à l'aide d'une cuvette qui est remplissable de matière plastique polymérisable par un dispositif d'injection, où la cuvette (16) est insérable dans une zone de réception, **caractérisée en ce qu'**un dispositif de chauffage (40) est logé de façon orientable et/ou déplaçable par rapport à la cuvette (16) sur un boîtier qui accueille la zone de réception (41) et le dispositif de chauffage (40), et le dispositif de chauffage (40) chauffe la cuvette (16) en position de chauffage distancée d'une position de repos.

25. Procédure de fabrication de pièces moulées médicales dentaires en matière plastique polymérisable selon la revendication 24, où une cuvette est remplissable de matière plastique polymérisable par un dispositif d'injection, remplissable de préférence à température ambiante, **caractérisée en ce que** juste après le remplissage de la cuvette (16) le dispositif de chauffage (40) est allumé et la cuvette est chauffée en commençant par le côté en face de l'orifice d'admission pour la matière plastique polymérisable.

26. Procédure selon l'une des revendications 24 ou 25, **caractérisée en ce que** la pression est maintenue, pendant que le dispositif de chauffage (40) est mis en circuit et la matière plastique est polymérisée, où de préférence le rétrécissement dû à la polymérisation est compensé par la matière plastique injecté en continu.

27. Procédure selon l'une des revendications 24 à 26, **caractérisée en ce que** le dispositif de chauffage est mis hors circuit après la polymérisation et que sa position de repos est déplacée et/ou pivoté.

28. Procédure selon l'une des revendications 24 à 27, **caractérisée en ce qu'**un dispositif de tension presse ensemble les carapaces de moule de la cuvette avant d'introduire de la matière plastique polymérisable et que de préférence le dispositif de tension n'est relâché qu'après avoir éteint le dispositif de chauffage (40) et le dispositif d'injection.
